# EUROPEAN PATENT APPLICATION

(11) **EP 2 887 758 A1**
(43) Date of publication of application: **24.06.2015**
(21) Application number: 13198995.6
(22) Date of filing: 20.12.2013
(51) Int. Cl.: H04W 88/08, H04W 92/12

(54) **Base Station Protocol Determination**

(71) Applicant: Nokia Solutions and Networks Oy, 02610 Espoo (FI)
(72) Inventor: Olszewski, Jaroslaw, 53-017 Wroclaw (PL)

(57) **Abstract**

A method comprising: receiving a first signal, the first signal being based on one of at least two base station interface protocols; determining within the first signal the rate of at least one type of data structuring byte; determining which of the one of at least two base station interface protocols the first signal is based on by using the rate of the at least one type of data structuring byte.

## Description

### Field

The invention relates to determining a base station communications protocol and in particular apparatus for determining a base station communications protocol.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communications may comprise, for example, communication of data for carrying communications such as voice, electronic mail (email), text message, multimedia and/or content data and so on. Non-limiting examples of services provided include two-way or multi-way calls, data communication or multimedia services and access to a data network system, such as the Internet.

In a wireless communication system at least a part of communications between at least two stations occurs over a wireless link. Examples of wireless systems include public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. An example of attempts to solve the problems associated with the increased demands for capacity is an architecture that is known as the long-term evolution (LTE) of the Universal Mobile Telecommunications System (UMTS) radio-access technology. The LTE is being standardized by the 3^{rd} Generation Partnership Project (3GPP). The various development stages of the 3GPP LTE specifications are referred to as releases. The aim of the standardization is to achieve a communication system with, inter alia, reduced latency, higher user data rates, improved system capacity and coverage, and reduced cost for the operator.

Base stations, base station nodes, access points or Base Transceiver Stations (BTS) are widely used as part of cellular network based on Radio Access Technologies (RAT), like GSM, (W)CDMA or LTE. Typically a BTS comprises at least one Base Band Unit (BBU) and at least one Radio Unit (RU) or Remote Radio Unit (RRU). Within the BTS a dedicated protocol is used to achieve flexible handling of control and user plane data exchange, for example between the BBU and the (R)RU nodes inside the BTS topology.

There are currently two types of protocols that are widely used for this purpose: Common Public Radio Interface (CPRI) and Open Base Station Architecture Initiative (OB-SAI).

Currently a common approach for a BTS vendor is to choose one of these two protocols for interconnecting BTS. This has led to the situation where vendors (like NSN) develop both BBU (Master) and RRU (Slave) synchronization nodes as one product, or create dedicated devices crafted for limited deployment scenarios, with very limited reuse of existing products.

### Summary

Embodiments of the invention aim to address one or several of the above issues.

In accordance with an embodiment there is provided a method comprising: receiving a first signal, the first signal being based on one of at least two base station interface protocols; determining within the first signal the rate of at least one type of data structuring byte; determining which of the one of at least two base station interface protocols the first signal is based on by using the rate of the at least one type of data structuring byte.

Receiving a first signal based on one of at least two base station interface protocols may comprise: decoding the first signal to determine whether the first signal comprises a valid byte; decoding the first signal to determine whether the first signal comprises at least one type of data structuring byte.

Determining within the first signal the rate of at least one type of data structuring byte may comprise: incrementing at least one counter associated with the at least one type of data structuring byte on receiving a valid byte of the first signal; determining the rate of at least one type of data structuring byte based on the at least one counter associated with the at least one type of data structuring byte on receiving the at least one type of data structuring byte within the first signal.

Determining which of the one of at least two base station interface protocols the first signal is based on by using the rate of the at least one type of data structuring byte may comprise comparing the rate of at least one type of data structuring byte against a predetermined rate value associated with one of the at least two base station interface protocols to determine the one of the at least two base station interface protocols.

The method may further comprise determining a byte rate of the first signal, wherein determining which of the one of at least two base station interface protocols the first signal is based on by using the rate of the at least one type of data structuring byte further comprises determining which of the one of at least two base station interface protocols the first signal is based on by using the rate of the at least one type of data structuring byte and the byte rate of the first signal.

Determining which of the one of at least two base station interface protocols the first signal is based on by using the rate of the at least one type of data structuring byte and the byte rate of the first signal may comprise: determining the byte rate of the first signal is a byte rate common to at least two of the at least two base station interface protocols; distinguishing between the at least two of the at least two base station interference protocols the first signal is based on based on the rate of the at least one type of data structuring byte.

A byte rate common to the at least two base station interface protocols is one of: 3072.0 Mbps; 6114.0 Mbps.

The at least one type of data structuring byte may comprise at least one of: at least one frame synchronisation byte; at least one idle sequence byte.

The at least two base station interface protocols may comprise: a common public radio interface protocol; an open base station architecture initiative protocol.

The at least one type of data structuring byte may be a comma byte.

The method may further comprise: configuring apparatus to synchronise the first signal; generating a response to the first signal based on the determined one of at least two base station interface protocols.

Receiving a first signal based on one of at least two base station interface protocols; and determining within the first signal the rate of at least one type of data structuring byte may be performed in hardware and determining which of the one of at least two base station interface protocols the first signal is based on by using the rate of the at least one type of data structuring byte may be performed in software.

According to a second aspect there is provided an apparatus comprising: means for receiving a first signal, the first signal being based on one of at least two base station interface protocols; means for determining within the first signal the rate of at least one type of data structuring byte; means for determining which of the one of at least two base station interface protocols the first signal is based on by using the rate of the at least one type of data structuring byte.

The means for receiving a first signal based on one of at least two base station interface protocols may comprise: means for decoding the first signal to determine whether the first signal comprises a valid byte; means for decoding the first signal to determine whether the first signal comprises at least one type of data structuring byte.

The means for determining within the first signal the rate of at least one type of data structuring byte may comprise: means for incrementing at least one counter associated with the at least one type of data structuring byte on receiving a valid byte of the first signal; means for determining the rate of at least one type of data structuring byte based on the at least one counter associated with the at least one type of data structuring byte on receiving the at least one type of data structuring byte within the first signal.

The means for determining which of the one of at least two base station interface protocols the first signal is based on by using the rate of the at least one type of data structuring byte may comprise means for comparing the rate of at least one type of data structuring byte against a predetermined rate value associated with one of the at least two base station interface protocols to determine the one of the at least two base station interface protocols.

The apparatus may further comprise means for determining a byte rate of the first signal, wherein means for determining which of the one of at least two base station interface protocols the first signal is based on by using the rate of the at least one type of data structuring byte may further comprise means for determining which of the one of at least two base station interface protocols the first signal is based on by using the rate of the at least one type of data structuring byte and the byte rate of the first signal.

The means for determining which of the one of at least two base station interface protocols the first signal is based on by using the rate of the at least one type of data structuring byte and the byte rate of the first signal may comprise: means for determining the byte rate of the first signal is a byte rate common to at least two of the at least two base station interface protocols; means for distinguishing between the at least two of the at least two base station interference protocols the first signal is based on based on the rate of the at least one type of data structuring byte.

A byte rate common to the at least two base station interface protocols may be one of: 3072.0 Mbps; 6114.0 Mbps.

The at least one type of data structuring byte may comprise at least one of: at least one frame synchronisation byte; at least one idle sequence byte.

The at least two base station interface protocols may comprise: a common public radio interface protocol; an open base station architecture initiative protocol.

The at least one type of data structuring byte may be a comma byte.

The apparatus may further comprise: means for configuring the apparatus to synchronise the first signal; means for generating a response to the first signal based on the determined one of at least two base station interface protocols.

The means for receiving a first signal based on one of at least two base station interface protocols; and the means for determining within the first signal the rate of at least one type of data structuring byte may be implemented in hardware and the means for determining which of the one of at least two base station interface protocols the first signal is based on by using the rate of the at least one type of data structuring byte may be implemented in software.

According to a third aspect there is provided an apparatus comprising at least one processor and at least one memory including computer program code for one or more programs, the at least one memory and the computer program code configured to, with the at least one processor, cause the apparatus at least to: receive a first signal, the first signal being based on one of at least two base station interface protocols; determine within the first signal the rate of at least one type of data structuring byte; determine which of the one of at least two base station interface protocols the first signal is based on by using the rate of the at least one type of data structuring byte.

Receiving a first signal based on one of at least two base station interface protocols may cause the apparatus to: decode the first signal to determine whether the first signal comprises a valid byte; decode the first signal to determine whether the first signal comprises at least one type of data structuring byte.

Determining within the first signal the rate of at least one type of data structuring byte may cause the apparatus to: increment at least one counter associated with the at least one type of data structuring byte on receiving a valid byte of the first signal; determine the rate of at least one type of data structuring byte based on the at least one counter associated with the at least one type of data structuring byte on receiving the at least one type of data structuring byte within the first signal.

Determining which of the one of at least two base station interface protocols the first signal is based on by using the rate of the at least one type of data structuring byte may cause the apparatus to compare the rate of at least one type of data structuring byte against a predetermined rate value associated with one of the at least two base station interface protocols to determine the one of the at least two base station interface protocols.

The apparatus may further be caused to determine a byte rate of the first signal, wherein determining which of the one of at least two base station interface protocols the first signal is based on by using the rate of the at least one type of data structuring byte may further cause the apparatus to determine which of the one of at least two base station interface protocols the first signal is based on by using the rate of the at least one type of data structuring byte and the byte rate of the first signal.

Determining which of the one of at least two base station interface protocols the first signal is based on by using the rate of the at least one type of data structuring byte and the byte rate of the first signal may cause the apparatus to: determine the byte rate of the first signal is a byte rate common to at least two of the at least two base station interface protocols; distinguish between the at least two of the at least two base station interference protocols the first signal is based on based on the rate of the at least one type of data structuring byte.

A byte rate common to the at least two base station interface protocols may be one of: 3072.0 Mbps; 6114.0 Mbps.

The at least one type of data structuring byte may comprise at least one of: at least one frame synchronisation byte; at least one idle sequence byte.

The at least two base station interface protocols may comprise: a common public radio interface protocol; an open base station architecture initiative protocol.

The at least one type of data structuring byte may be a comma byte.

The apparatus may further be caused to: configure the apparatus to synchronise the first signal; generate a response to the first signal based on the determined one of at least two base station interface protocols.

Receiving a first signal based on one of at least two base station interface protocols; and determining within the first signal the rate of at least one type of data structuring byte may be implemented in hardware and determining which of the one of at least two base station interface protocols the first signal is based on by using the rate of the at least one type of data structuring byte may be implemented in software.

According to a fourth aspect there is provided an apparatus comprising: a decoder configured to receive a first signal, the first signal being based on one of at least two base station interface protocols; a counter/register configured to determine within the first signal the rate of at least one type of data structuring byte; a protocol determiner configured to determine which of the one of at least two base station interface protocols the first signal is based on by using the rate of the at least one type of data structuring byte.

The decoder may comprise: a verifier configured to determine whether the first signal comprises a valid byte; a byte structure decoder configured to determine whether the first signal comprises at least one type of data structuring byte.

The counter/register may comprise: at least one counter and at least one register associated with the at least one type of data structure byte, wherein the at least one counter associated with the at least one type of data structure byte may be configured to be incremented on receiving a valid byte indicator; and may be configured to output a counter value of the at least one counter associated with the at least one type of data structure byte to the at least one register associated with the at least one type of data structure byte on receiving an indicator that a current byte within the first signal is the at least one type of data.

The protocol determiner configured to determine which of the one of at least two base station interface protocols the first signal is based on by using the rate of the at least one type of data structuring byte may comprise a comparator configured to compare the rate of at least one type of data structuring byte against a predetermined rate value associated with one of the at least two base station interface protocols to determine the one of the at least two base station interface protocols.

The decoder may further be configured to determine a byte rate of the first signal, wherein the protocol determiner may be configured to determine which of the one of at least two base station interface protocols the first signal is based on by using the rate of the at least one type of data structuring byte and the byte rate of the first signal.

The protocol determiner may be configured to: determine the byte rate of the first signal is a byte rate common to at least two of the at least two base station interface protocols; distinguish between the at least two of the at least two base station interference protocols the first signal is based on based on the rate of the at least one type of data structuring byte.

A byte rate common to the at least two base station interface protocols may be one of: 3072.0 Mbps; 6114.0 Mbps.

The at least one type of data structuring byte may comprise at least one of: at least one frame synchronisation byte; at least one idle sequence byte.

The at least two base station interface protocols may comprise: a common public radio interface protocol; an open base station architecture initiative protocol.

The at least one type of data structuring byte may be a comma byte.

The apparatus may further comprise: a controller configured to configure the apparatus to synchronise the first signal; the controller may further be configured to generate a response to the first signal based on the determined one of at least two base station interface protocols.

The decoder; and the counter/register may be implemented in hardware and the protocol determiner may be implemented in software.

A computer program comprising program code means adapted to perform the steps of the method as discussed herein when the program is run on a data processing apparatus.

Various other aspects and further embodiments are also described in the following detailed description and in the attached claims.

The invention will now be described in further detail, by way of example only, with reference to the following examples and accompanying drawings, in which:
Figure 1 shows an example of a communication system in which some embodiments may be implemented;
Figure 2 shows an example of a base station suitable for employing some embodiments;
Figure 3 shows in further detail a protocol determiner according to some embodiments, and;
Figure 4 illustrates a flowchart for a method of determining a protocol according to some embodiments.

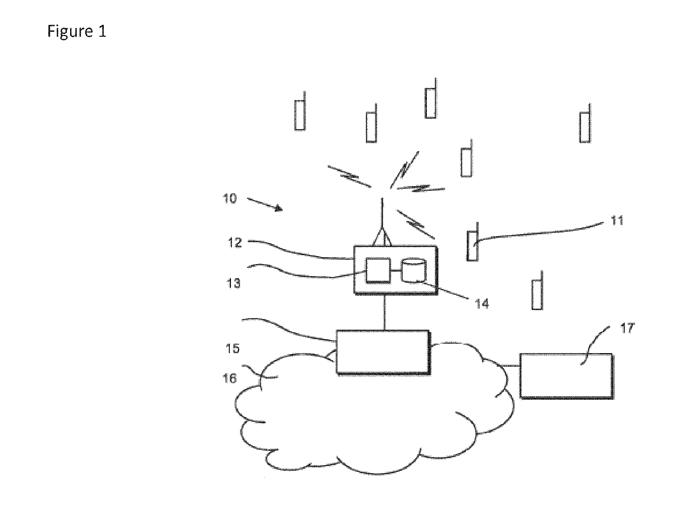

In the following certain exemplifying embodiments are explained with reference to wireless or mobile communication systems serving mobile communication devices. Before explaining in detail the certain exemplifying embodiments, certain general principles of a wireless communication system and mobile communication devices are briefly explained with reference to Figure 1 to assist in understanding the technology underlying the described examples.

A communication device can be used for accessing various services and/or applications provided via a communication system. In wireless or mobile communication systems the access is provided via a wireless access interface between mobile communication devices 11 and an appropriate access system 10. A mobile device 11 can typically access wirelessly a communication system via at least one base station 12 (Base Transceiver Station) or similar wireless transmitter and/or receiver node of the access system. A base transceiver station site typically provides one or more cells of a cellular system. In the Figure 1 example the base transceiver station 12 is configured to provide a cell, but could provide, for example, three sectors, each sector providing a cell. Each mobile device 11 and base transceiver station 12 may have one or more radio channels open at the same time and may receive signals from more than one source.

A base transceiver station 12 is typically controlled by at least one appropriate controller so as to enable operation thereof and management of mobile communication devices in communication with the base station. The control entity can be interconnected with other control entities. In Figure 1 the controller is shown to be provided by block 13. The controller is thus typically provided with memory capacity and at least one data processor. It shall be understood that the control functions may be distributed between a plurality of controller units. The controller apparatus for the base transceiver station 12 may be configured to execute an appropriate software code to provide the control functions as explained below in more detail.

In the Figure 1 example the base transceiver station 12 is connected to a data network 16 via an appropriate gateway 15. A gateway function between the access system and another network such as a packet data network may be provided by means of any appropriate gateway node, for example a packet data gateway and/or an access gateway 17. A communication system may thus be provided by one or more interconnect networks and the elements thereof, and one or more gateway nodes may be provided for interconnecting various networks.

A communication device can be used for accessing various services and/or applications. The communication devices can access the communication system based on various access techniques, such as code division multiple access (CDMA), or wideband CDMA (WCDMA). The latter technique is used by communication systems based on the third Generation Partnership Project (3GPP) specifications. Other examples include time division multiple access (TDMA), frequency division multiple access (FDMA), space division multiple access (SDMA) and so on. A non-limiting example of mobile architectures where the herein described principles may be applied is known as the Evolved Universal Terrestrial Radio Access Network (E-UTRAN).

Non-limiting examples of appropriate access nodes are a base transceiver station of a cellular system, for example what is known as NodeB or enhanced NodeB (eNB) in the vocabulary of the 3GPP specifications. The eNBs may provide E-UTRAN features such as user plane Radio Link Control/Medium Access Control/Physical layer protocol (RLC/MAC/PHY) and control plane Radio Resource Control (RRC) protocol terminations towards mobile communication devices. Other examples include base stations of systems that are based on technologies such as wireless local area network (WLAN) and/or WiMax (Worldwide Interoperability for Microwave Access).

An appropriate mobile communication device may be provided by any device capable of sending and receiving radio signals. Non-limiting examples include a mobile station (MS) such as a mobile phone or what is known as a 'smart phone', a portable computer provided with a wireless interface card or other wireless interface facility, personal data assistant (PDA) provided with wireless communication capabilities, or any combinations of these or the like. A mobile communication device may be used for voice and video calls, for accessing service applications provided via a data network.

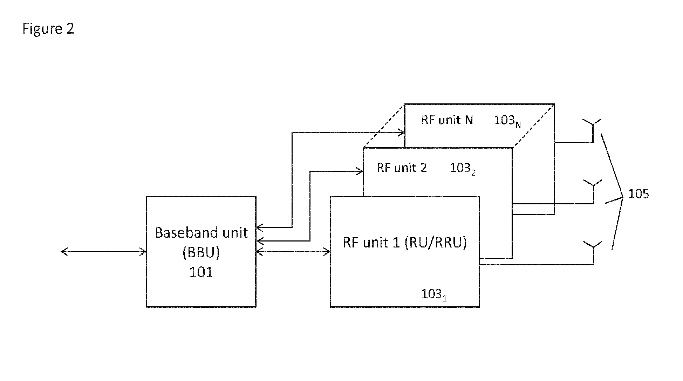

The base transceiver station 12 will now be described in further detail with reference to Figure 2. Figure 2 discloses a base station 12 according to some embodiments. The base station 12 comprises at least one base band unit (BBU) 101 which can perform system operations such as communicating with a core network. Furthermore in some embodiments the base transceiver station 12 comprises at least one RF unit (RU) or remote RF unit (RRU) 103. In the example shown in Figure 2 the base transceiver station 12 comprises N RF units labelled 103₁ 103₂ and 103_{N}. The base band unit BBU 101 20 communicates with a radio frequency units (RU)/ remote radio units (RRU) over a defined interface. This defined interface is within the OBSAI specification defined the RP3 interface. The radio frequency unit 103 is configured to convert base band signals into a format suitable for transmission over a wireless network. The radio frequency unit 103 sends signals for wireless transmissions to an antenna system 105. The antenna system 105 comprises a plurality of antennas 23. In some embodiments the radio frequency unit is separate from the base band unit, however alternatively the radio frequency unit and the base band unit may be comprised in the same network entity. In some other embodiments the antenna system 105 and the radio frequency unit 103 may be comprised in the same network entity. The plurality of antennas may be used together for the purposes of beam forming wireless transmissions.

The base transceiver station 12 base band unit BBU 101 furthermore in some embodiments can be configured to operate as the primary control processor for the BTS. The base band unit BBU 101 can for example in some embodiments be configured to control BTS resources, supervise all BTS activities, monitor BTS status and report BTS status and performance data. The base band unit BBU 101 can in some embodiments comprise one or more modules that perform the functions described herein: congestion control; admission control; BTS Level OAM&P functions; BTS Configuration Management and Control; Radio Resource Management; Multi-vendor Configurations; RF Scheduling; Network Interface (NI) Signalling Termination; System Clock Generation and Distribution.

Common approach for a BTS vendor is to choose one of the two protocols (CPRI or OBSAI) for interconnecting the modules within the BTS. Often, vendors (for example NSN) develop both BBU (Master) and RRU (Slave) synchronization nodes as one product, or create a dedicated device crafted for limited deployment scenarios. These dedicated devices have very limited capability of being implemented alongside (and therefore reusing) existing products.

It would be understood that BTS vendors want to develop BBU or (R)RU modules, that can support both protocol types in order to provide higher level of compatibility and cost reduction by product reuse. Similarly BTS operators need not operate with stocks of modules or units for each protocol type for repair purposes but instead could operate with inventories of modules or units capable of operating both protocols.

The interface between the BBU and (R)RU modules for both CPRI and OBSAI protocols use the line code 8b/10b for L1 byte encoding and defines several line rates (speeds), as well as the appropriate procedures for line rate detection within the bounds of each protocol. In such circumstances when the receiver within the BBU/(R)RU module is capable of decoding valid bytes consecutively (with BER < 10e-12), a valid line rate can be detected and synchronization on protocol level may begin.

It has been proposed that a protocol detection operation can be performed based on determination of the line rate. For example it is defined within the CPRI and OBSAI standards the following line rates
CPRI [Mbps]: 614.4, 1228.8, 2457.6, 3072.0, 4915.2, 6144.0, and 9830.4
OBSAI [Mbps]: 768.0, 1536.0, 3072.0 and 6144.0

From these defined line rates it can be seen that most of these line rates are specific for a defined protocols. However, the 3072.0 Mbps or 6114.0 Mbps line rate produces an ambiguous protocol determination.

The concept as described in embodiments herein performs protocol detection by the BBU or (R)RU module receiver based on a byte level determination. It is understood that in both CPRI and OBSAI standards synchronization comma bytes are used for frame structuring purposes. Furthermore the number of comma characters (sync bytes [k] and idle sequences [d]: k28.5, k28.7, k28.5+d5.6, k28.5+d16.2) used for synchronization purposes and the location of the comma characters within byte frame structure is unique for each (CPRI/ OBSAI) protocol. Therefore in the embodiments as described herein the BBU or (R)RU can be configured to detect or determine the frame structure from the received byte stream and match the determined frame structure to one of the predetermined or known frame structures in order to determine or detect the protocol.

In other words the concept or principle of frame structure detection can be based on computing the rate of received sync bytes [k] or idle sequences [d] relative to a determined operation line rate. In some embodiments such as described herein the protocol determiner, determination of the protocol or suitable means for determining the protocol can be an additional functionality of receiver's 10b/8b byte decoding block, used during line rate detection - L1 synchronization attempt.

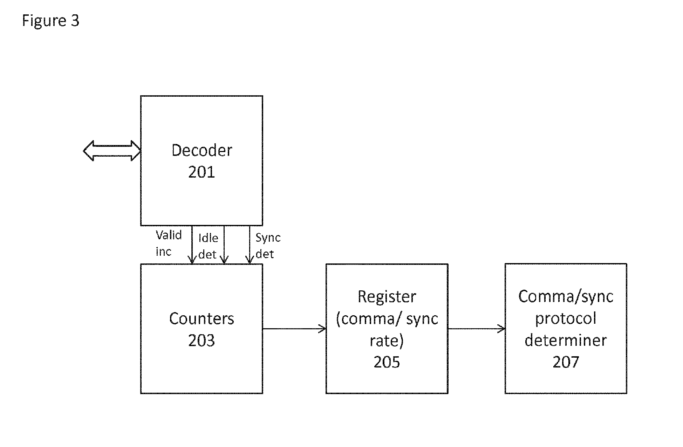

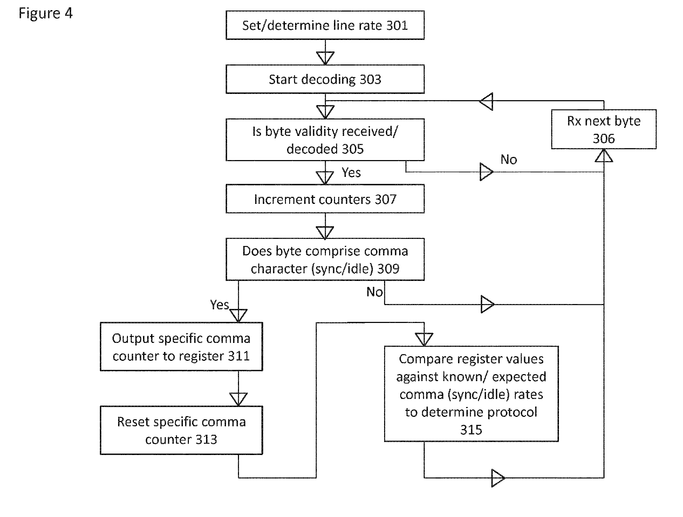

With respect to Figure 3 an example protocol detector apparatus is shown according to some embodiments. Furthermore with respect to Figure 4 the operation of the protocol detector apparatus shown in Figure 3 is shown by a flow diagram. In some embodiments the protocol detector comprises a decoder 201. The decoder 201 can be configured to receive data over the interface in question and perform a line code decoding based on a 10b/8b decoding operation.

Furthermore the decoder 201 can be configured determine a line rate, having received several lines/bytes.

The operation of setting or determining a line rate is shown in Figure 4 by step 301.

The decoder 201 can in some embodiments then start decoding the received lines/bytes.

The operation of starting the decoding operation is shown in Figure 4 by step 303.

In some embodiments the decoder 201 can be configured to determine whether the line/byte is valid, in other words whether the line/byte has been validly received/decoded.

The operation of determining whether the line/byte has been validly received/decoded is shown in Figure 4 by step 305.

Where the line/byte has not been validly received/decoded then the decoder 201 attempts to receive and validly decode the next line/byte.

The operation of receiving the next byte is shown in Figure 4 by step 306.

Where the line/byte has been validly received/decoded then the decoder 201 can be configured to output an incremental counter (or a valid byte indicator) to a counter block 203.

In some embodiments the protocol determiner comprises a counter block 203. The counter block 203 comprises at least one counter configured to receive an input from the decoder when a valid byte has been received. The at least one counter is associated with a comma character. The comma character can be at least one synchronisation byte or an idle sequence.

Thus for example where the line/byte has been validly received/decoded then the at least one counter is incremented.

The operation of incrementing the at least one counter is shown in Figure 4 by step 307.

The decoder 201 furthermore can be configured to determine or detect when a byte comprises a comma character. Examples of comma characters are synchronisation bytes or an idle sequence.

Furthermore in some embodiments the decoder 201 can be configured to determine the type of comma character and generate a suitable indicator associated with the type of comma character. The indicator associated with determining a specific type of comma character can then be sent to the counter block 203.

The operation of detecting or determining a byte comprises a comma character (and the type of comma character) is shown in Figure 4 by step 309.

Where the byte does not comprise a comma character then the next byte is received. In other words no comma character indicator is generated and instead the operation passes back to step 306.

Where the byte comprises a comma character then the counter block 203 is in some embodiments further configured to receive the indicator via an input (for example a comma character type indicator input from the decoder 201). In some embodiments the at least one counter within the counter block 203 can be assigned or associated with the specific type of comma character which has been detected is output to the register 205 and the counter is reset.

The operation of outputting a specific comma counter value to the register is shown in Figure 4 by step 311.

The operation of resetting the specific, carrying counter is shown in Figure 4 by step 313.

In some embodiments the protocol detector apparatus comprises a register block (comprising at least one register associated with a specific comma character). The register block 205 can be configured to receive from the counter and store a counter value.

In some embodiments the register block 205 can furthermore be configured to perform some averaging or other processing on the received counter and the register value. For example in some embodiments the register block comprises multiple register addresses for each comma type in order to allow an averaging of the last N counter values.

In some embodiments the protocol determiner comprises a comma-based protocol determiner 207. The comma-based protocol determiner can be configured to read the register values and compare the register values against a determined, predetermined or known comma expected reception rate. The output of this comparison between the register values against the known/expected comma values to determine the protocol can in some embodiment be configured to generate a protocol indicator or other message used to control the receiver and determine which protocol is being used by the transmitter and thus configure the receiver to be able to format the bytes output by the decoder 201 according to the determined protocol.

The operation of comparing the register values against known/expected comma rates to determine a protocol is shown in Figure 4 by step 315.

For example expected reception rate of sync bytes in OBSAI framed data stream are the following:
k28.5 sync byte rate = K_MG / (M_MG * 19 + K_MG)
k28.7 sync byte rate = 1 / (iOBSAI * N_MG * (M_MG * 19 + K_MG))
where K_MG is the OBSAI parameter that defines amount of k28.5 idle codes in one Message Group, M_MG is the OBSAI parameter that defines amount of RP3 messages in one Message Group, and iOBSAI is the OBSAI line rate of operation (possible values are: 1, 2, 4 and 8).

Whereas an expected reception rate of sync bytes and idle sequences in CPRI framed data stream are the following:
k28.5 sync byte and d16.2, d5.6 idles rate = 1 / (iCPRI * 20 * 256)

where iCPRI is the CPRI multiplier (when multiplied by 3.84 Mbps) which defines CPRI line rate (possible values are: 160, 320, 640, 800, 1280, 1600 and 2560).
In other words, as described herein, comma byte detection is implemented by a 10b/8b decoder (on receiver side), when the proper line rate for a received signal is set. In such embodiments each sync/comma byte type increments a dedicated counter when detected from the received data stream. Furthermore although the above embodiments are described with respect to an implementation set in hardware it would be understood that the byte counters and protocol selection can be implemented either in hardware, or software, or as a mixed solution.

For example in some embodiments, where for example it is not convenient to include protocol selection logic in hardware design, some flexibility in detection logic is needed, which may be easy to achieve by software. On the other hand, in some embodiments a pure software approach may impose too hard runtime requirements for CPU, especially for high speed rates. Therefore in some embodiments a mixed approach is implemented, where counting logic is embedded in hardware and protocol selection logic is implemented in software.

For example a dedicated counter can in some embodiments be placed in parallel to 10b8b decoder. The counter shall be incremented each time valid a 10b8b decoded byte is received. When the decoder detects comma byte a 'K' signal is generated and counter value is placed into software readable register, and the counter is cleared. In such embodiments there could be a counter for each type of comma character/sync byte.

Similarly a set of values (from hardware counters) can be employed to indicate the amount of bytes between each type of comma character/sync byte. This indicates the rate of each comma character/sync byte. In such examples software can compare detected rates with expected (unique) rates for each protocol.

As discussed herein the determination or detection may occasionally lead to an ambiguous result, for example because of an expected level of bit error rate (BER) injected to the physical layer and impacting 10b8b decoding. However as it is not expected to produce ambiguous results consecutively in some embodiments the comma based protocol determiner, for example implemented within software, can verify a determined or detected protocol by analysing previous or consecutive protocol determinations.

In such a manner where a RRU is connected to a BTS that uses an unknown protocol for interconnection, the RRU comprising suitable protocol determination apparatus according to some embodiments can enable the 10b8b decoder with protocol detection counters, without enabling a receiver/protocol frame synchronization state machine. The RRU can then determine or detect the protocol according to the logic or software algorithm (described herein). The RRU can then be configured to enable a CPRI, or an OB-SAI receiver (depending on which protocol is detected) and proceeds with synchronization. The RRU is the detected by the remainder of the BTS. Further configuration and cell setup on the RRU can then proceed. In some embodiments a BBU connected to any RRU can determine a protocol type to select appropriate protocol for further synchronization process, RRU detection and cell setup.

It is noted that whilst embodiments have been described in relation to LTE, similar principles can be applied to any other communication system where a carrier comprising a multiple of component carriers is employed. Also, instead of carriers provided by a base station a carrier comprising component carriers may be provided by a communication device such as a mobile user equipment. For example, this may be the case in application where no fixed equipment provided but a communication system is provided by means of a plurality of user equipment, for example in adhoc networks. Therefore, al-though certain embodiments were described above by way of example with reference to certain exemplifying architectures for wireless networks, technologies and standards, embodiments may be applied to any other suitable forms of communication systems than those illustrated and described herein.

It is also noted herein that while the above describes exemplifying embodiments of the invention, there are several variations and modifications which may be made to the dis-closed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), FPGA, gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed in there is a further embodiment comprising a combination of one or more embodiments with any of the other embodiments previously discussed.

## Claims

1. A method comprising:
receiving a first signal, the first signal being based on one of at least two base station interface protocols;
determining within the first signal the rate of at least one type of data structuring byte;
determining which of the one of at least two base station interface protocols the first signal is based on by using the rate of the at least one type of data structuring byte.

2. The method according to claim 1, wherein receiving a first signal based on one of at least two base station interface protocols comprises:
decoding the first signal to determine whether the first signal comprises a valid byte;
decoding the first signal to determine whether the first signal comprises at least one type of data structuring byte.

3. The method according to any of claims 1 and 2, wherein determining within the first signal the rate of at least one type of data structuring byte comprises:
incrementing at least one counter associated with the at least one type of data structuring byte on receiving a valid byte of the first signal;
determining the rate of at least one type of data structuring byte based on the at least one counter associated with the at least one type of data structuring byte on receiving the at least one type of data structuring byte within the first signal.

4. The method according to any of claims 1 to 3, wherein determining which of the one of at least two base station interface protocols the first signal is based on by using the rate of the at least one type of data structuring byte comprises comparing the rate of at least one type of data structuring byte against a predetermined rate value associated with one of the at least two base station interface protocols to determine the one of the at least two base station interface protocols.

5. The method according to any of claims 1 to 4, further comprising determining a byte rate of the first signal, wherein determining which of the one of at least two base station interface protocols the first signal is based on by using the rate of the at least one type of data structuring byte further comprises determining which of the one of at least two base station interface protocols the first signal is based on by using the rate of the at least one type of data structuring byte and the byte rate of the first signal.

6. The method according to claim 5, wherein determining which of the one of at least two base station interface protocols the first signal is based on by using the rate of the at least one type of data structuring byte and the byte rate of the first signal comprises:
determining the byte rate of the first signal is a byte rate common to at least two of the at least two base station interface protocols;
distinguishing between the at least two of the at least two base station interference protocols the first signal is based on based on the rate of the at least one type of data structuring byte.

7. The method according to claim 6 wherein a byte rate common to the at least two base station interface protocols is one of:
3072.0 Mbps;
6114.0 Mbps.

8. The method according to any of claims 1 to 7, wherein the at least one type of data structuring byte comprises at least one of:
at least one frame synchronisation byte;
at least one idle sequence byte.

9. The method according to any of claims 1 to 8, wherein the at least two base station interface protocols comprise:
a common public radio interface protocol;
an open base station architecture initiative protocol.

10. The method according to any of claims 1 to 9, wherein the at least one type of data structuring byte is a comma byte.

11. The method according to any of claims 1 to 10, further comprising:
configuring apparatus to synchronise the first signal;
generating a response to the first signal based on the determined one of at least two base station interface protocols.

12. The method according to any of claims 1 to 11, wherein
the receiving a first signal based on one of at least two base station interface protocols; and determining within the first signal the rate of at least one type of data structuring byte are performed in hardware and determining which of the one of at least two base station interface protocols the first signal is based on by using the rate of the at least one type of data structuring byte is performed in software.

13. An apparatus comprising:
means for receiving a first signal, the first signal being based on one of at least two base station interface protocols;
means for determining within the first signal the rate of at least one type of data structuring byte;
means for determining which of the one of at least two base station interface protocols the first signal is based on by using the rate of the at least one type of data structuring byte.

14. The apparatus according to claim 13, wherein the means for receiving a first signal based on one of at least two base station interface protocols comprises:
means for decoding the first signal to determine whether the first signal comprises a valid byte;
means for decoding the first signal to determine whether the first signal comprises at least one type of data structuring byte.

15. An apparatus comprising at least one processor and at least one memory including computer program code for one or more programs, the at least one memory and the computer program code configured to, with the at least one processor, cause the apparatus at least to:
receive a first signal, the first signal being based on one of at least two base station interface protocols;
determine within the first signal the rate of at least one type of data structuring byte;
determine which of the one of at least two base station interface protocols the first signal is based on by using the rate of the at least one type of data structuring byte.

16. The apparatus according to claim 15, wherein receiving a first signal based on one of at least two base station interface protocols causes the apparatus to:
decode the first signal to determine whether the first signal comprises a valid byte;
decode the first signal to determine whether the first signal comprises at least one type of data structuring byte.

17. An apparatus comprising:
a decoder configured to receive a first signal, the first signal being based on one of at least two base station interface protocols;
a counter/register configured to determine within the first signal the rate of at least one type of data structuring byte;
a protocol determiner configured to determine which of the one of at least two base station interface protocols the first signal is based on by using the rate of the at least one type of data structuring byte.

18. The apparatus according to claim 17, wherein the decoder comprises:
a verifier configured to determine whether the first signal comprises a valid byte;
a byte structure decoder configured to determine whether the first signal comprises at least one type of data structuring byte.

19. A computer program comprising program code means adapted to perform the steps of any of claims 1 to 12 when the program is run on a data processing apparatus.

## Amended claims

### Amended claims in accordance with Rule 137(2) EPC.

1. A method comprising:
receiving a first signal, the first signal being based on one of at least two base station interface protocols;
determining within the first signal the rate of at least one comma byte;
**characterised by**
determining which of the one of at least two base station interface protocols the first signal is based on by using the rate of the at least one comma byte.

2. The method according to claim 1, wherein receiving a first signal based on one of at least two base station interface protocols comprises:
decoding the first signal to determine whether the first signal comprises a valid byte;
decoding the first signal to determine whether the first signal comprises at least one comma byte.

3. The method according to any of claims 1 and 2, wherein determining within the first signal the rate of at least one comma byte comprises:
incrementing at least one counter associated with the at least one comma byte on receiving a valid byte of the first signal;
determining the rate of at least comma byte based on the at least one counter associated with the at least one comma byte on receiving the at least one comma byte within the first signal.

4. The method according to any of claims 1 to 3, wherein determining which of the one of at least two base station interface protocols the first signal is based on by using the rate of the at least one comma byte comprises comparing the rate of at least one comma byte against a predetermined rate value associated with one of the at least two base station interface protocols to determine the one of the at least two base station interface protocols.

5. The method according to any of claims 1 to 4, further comprising determining a byte rate of the first signal, wherein determining which of the one of at least two base station interface protocols the first signal is based on by using the rate of the at least one comma byte further comprises determining which of the one of at least two base station interface protocols the first signal is based on by using the rate of the at least one comma byte and the byte rate of the first signal.

6. The method according to claim 5, wherein determining which of the one of at least two base station interface protocols the first signal is based on by using the rate of the at least one type of data structuring byte and the byte rate of the first signal comprises:
determining the byte rate of the first signal is a byte rate common to at least two of the at least two base station interface protocols;
distinguishing between the at least two of the at least two base station interface protocols the first signal is based on the rate of the at least one comma byte.

7. The method according to claim 6 wherein a byte rate common to the at least two base station interface protocols is one of:
3072.0 Mbps;
6114.0 Mbps.

8. The method according to any of claims 1 to 6, wherein the at least two base station interface protocols comprise:
a common public radio interface protocol;
an open base station architecture initiative protocol.

9. The method according to any of claims 1 to 98, further comprising:
configuring apparatus to synchronise the first signal;
generating a response to the first signal based on the determined one of at least two base station interface protocols.

10. The method according to any of claims 1 to 9, wherein
the receiving a first signal based on one of at least two base station interface protocols; and determining within the first signal the rate of at least one comma byte are performed in hardware and determining which of the one of at least two base station interface protocols the first signal is based on by using the rate of the at least one comma byte is performed in software.

11. An apparatus comprising:
means for receiving a first signal, the first signal being based on one of at least two base station interface protocols;
means for determining within the first signal the rate of at least one comma byte;
**characterised by**
means for determining which of the one of at least two base station interface protocols the first signal is based on by using the rate of the at least one comma byte.

12. The apparatus according to claim 11, wherein the means for receiving a first signal based on one of at least two base station interface protocols comprises:
means for decoding the first signal to determine whether the first signal comprises a valid byte;
means for decoding the first signal to determine whether the first signal comprises at least one comma byte.

13. A computer program comprising program code means adapted to perform the steps of any of claims 1 to 10 when the program is run on a data processing apparatus.
